# EUROPEAN PATENT SPECIFICATION

(11) **EP 3 442 192 B1**
(45) Date of publication and mention of the grant of the patent: **05.01.2022**
(21) Application number: 17185250.2
(22) Date of filing: 08.08.2017
(51) Int. Cl.: H04L 29/06, H04L 29/08

(54) **METHOD FOR MONITORING TRAFFIC BETWEEN NETWORK MEMBERS IN A NETWORK**
VERFAHREN ZUR ÜBERWACHUNG VON VERKEHR ZWISCHEN NETZWERKELEMENTEN IN EINEM NETZWERK
PROCÉDÉ DE SURVEILLANCE DE LA CIRCULATION ENTRE DES ÉLÉMENTS DE RÉSEAU DANS UN RÉSEAU

(43) Date of publication of application: 13.02.2019
(73) Proprietor: Robert Bosch GmbH, 70442 Stuttgart (DE)
(72) Inventor: Shukla, Siddharth, 21177 Malmö (SE); Sahlstroem, Mikael, 21424 Malmö (SE)

(56) References cited:
- US-A1- 2009 125 470
- US-A1- 2009 199 266
- US-A1- 2015 341 270
- US-A1- 2015 358 288

## Description

### Field of the invention

The present invention relates to a method for monitoring traffic between network members in a network, especially in an automotive network, by means of a stateful firewall as well as to a computing unit and to a computer program for performing the method.

### Background of the invention

So called content addressable memory (CAM) is a type of memory, which can search its entire content in one clock cycle, in the course of which the CAM searches by content and not by address. The CAM compares input search data against a table of stored data and returns the address of matching data.

A ternary content addressable memory (TCAM) has the ability to store and search three different inputs, 0, 1, and x, where x represents a so called "don't care" state. For example, a TCAM might have an entry such as "10xx0," where "x" indicates the "don't care" state. This entry will match any of the four search keys: "10000," "10010," "10100," or "10110." A binary content addressable memory can only store and search 0 or 1.

The use of a CAM for firewalls for filter network traffic in a network is described e.g. in US 8 166 536 B1. A corresponding filter includes regular expressions that are converted by the firewall into a format that can be stored in a ternary content addressable memory TCAM. The firewall programs the TCAM to implement the filter based on the converted one or more input regular expressions.

Document US 2015/0358288 A1 discloses a method for stateful packet classification that uses hardware resources for performing stateless lookups and software resources for performing stateful connection flow handshaking. To classify an incoming packet from a network, stateless look up operations for the incoming packet are performed in hardware and the result of the stateless look up is forwarded to the software. The software in turn uses the result of the stateless look up to perform the stateful connection flow handshaking and to determine the result of the stateful packet classification.

US 2009/199266 A1 discloses a method and compiler for compiling hierarchical command based policy rules to a flat filter list structure adapted for storage in a Content Addressable Memory (CAM), wherein the policy rules are organized in a tree-structure of classifiers. First, all of the possible search paths in the tree structure are found, and then only the valid search paths according to defined criteria are added to the flat filter list. The CAM may be a Ternary Content Addressed Memory.

US 2009/125470 A1 describes systems and methods for updating access control list (ACL) rule entries in a ternary content addressable memory (TCAM). In a firewall, ACL rules are scanned for each packet arriving in a router or switch to determine if a match exists between the packet and any of the patterns. Depending on the pattern matched, the corresponding action may be either to accept or to deny the packet. These rules are stored in a TCAM, and new or updated rules may be added to the TCAM. It can be determined whether the new or updated rule has a dependency conflict with existing rules in the TCAM. If not, the rule can be inserted anywhere in the TCAM. Accordingly, the TCAM associated with a firewall's ACL can be updated more quickly and efficiently.

It is desirable to further improve the use of content addressable memory (CAM), particularly ternary content addressable memory (TCAM) in firewalls, especially for the use in automotive networks.

### Disclosure of the invention

The invention is defined in the independent claims. Advantageous features are described in the dependent claims.

According to the invention a method for monitoring traffic between network members in a network, especially in an automotive network, by means of a stateful firewall as well as a computing unit and a computer program for performing the method with the features of the independent claims are proposed. Advantageous further developments form the subject matter of the dependent claims and of the subsequent description.

Different network members are connected with a network switch, especially an Ethernet switch. Particularly, each network member is connected with a different port of the network switch. The network switch comprises a processor unit and a content addressable memory (CAM), particularly a ternary content addressable memory (TCAM). The processor unit can be a single central processing unit (CPU) or a multi-core processor with two or more CPUs. In the following description, the processing is also referred to as "switch CPU".

In order to e.g. prevent attacks and the introduction of harmful content, traffic of the network is monitored by means of the stateful firewall. This stateful firewall is implemented in the network switch. The stateful firewall is implemented in the network switch in a co-design on the one hand by software, which is executed on the processing unit and on the other hand by hardware in the form of the CAM. The stateful firewall is a firewall, which keeps track of connections from one endpoint of the network to another. Particularly, a stateful firewall monitors incoming and outgoing data, data units or data packets over time, as well as the state of a connection between network members, and stores this information in a dynamic state table.

For this purpose, a so called stateful firewall state table is provided, in the following also referred to as "state table". Entries of this state table are referred to as stateful firewall rules, in the following also simply referred to as "rules". These stateful firewall rules state, whether connections and/or data transmissions between different network members are allowed or denied. Particularly, only the switch CPU has access to this state table. For example, the state table can be stored in an internal memory of the switch CPU, e.g. register, or in a memory unit like a flash memory, EEPROM, etc., to which especially only the switch CPU has access.

In order to transmit data between two network members through the stateful firewall, first of all a connection needs to be established between these two network members. The processor unit of the network switch is used for monitoring and validating the establishment of a connection of that kind. After the connection is established, the CAM is used to monitor data or data units to be transmitted between the connected network members. For this purpose the method according to the invention comprises the following steps:
Upon receiving a request for establishing a connection between two network members, the processor unit decides whether to allow or to deny the connection according to the stateful firewall state table. If the requested connection matches a stateful firewall rule of the state table and is allowed according to the state table, the processor allows establishing the connection. If on the other hand the requested connection matches a rule of the state table but is denied according to the state table, the processor does not allow establishing the connection. If the requested connection does not match any stateful firewall rule of the state table, the switch CPU denies the connection.

If the connection is allowed and established, the processor unit updates the stateful firewall state table about the established connection. Moreover, if the connection is allowed and established, upon receiving a data transmission between the two network members, the CAM compares this received data transmission with a stateful firewall rule from the stateful firewall state table, which is stored in the CAM. Depending on a result of this comparison the received data transmission is allowed or denied or transferred to the processor unit for further evaluation.

The stateful firewall rule stored in the CAM is expediently linked with a corresponding action. Particularly, this stored stateful firewall rule states whether to allow or to deny the received data transmission or whether to transfer the received data transmission to the processor unit for further evaluation as corresponding action. The CAM especially compares the attributes of the received data transmission with the attributes of the corresponding stored stateful firewall rule. If all attributes match, the CAM particularly performs the corresponding action linked with the stateful firewall rule, i.e. allowing, denying or transmitting the data transmission to the CPU.

It shall be understood that two or more stateful firewall rules from the state table can be stored in the CAM concerning different kinds of data transmission between the two network members. For example these different rules can concern the transmission of different kinds of data from a first one of the two network members to a second one and vice versa. If the received data transmission matches a stateful firewall rule stored in the CAM and is allowed according to that rule, the CAM accepts the data and allows it to pass through the network switch. If the received data transmission matches a stateful firewall rule stored in the CAM but is denied according to that rule, the CAM particularly drops the data and denies its passage through the network switch. Particularly, if the received data transmission does not match any of the stateful firewall rule stored in the CAM, the data transmission is denied or transmitted to the CPU, which further evaluates the data and decides whether to allow or deny the data passing through the network switch. If the received data transmission would trigger a state change of the established connection, the CAM especially transmits the received data transmission to the processor unit, which further evaluates the data and decides whether to allow or deny the data passing through the network switch and especially updates the state of the established connection accordingly.

Thus, a first part of the stateful firewall, i.e. monitoring, allowing, denying connection requests, is implemented in the network switch by software executed on the processing unit. A second part of the stateful firewall, namely the monitoring of data transmissions between connected network members, is implemented in the network switch by hardware in the form of the CAM. This monitoring of traffic between connected network members can thus be outsourced from the switch CPU to the CAM, particularly during runtime of the processor unit.

In common stateful firewalls the corresponding CPU of the stateful firewall is usually used to monitor and validate connections between network members and to monitor, allow, deny traffic between connected network members. Thus, a common stateful firewall is usually implemented only by software executed on the corresponding CPU. Since the corresponding state table of common stateful firewall is usually maintained in a memory unit only accessible from the switch internal CPU, only the CPU knows about the current connection states of network members and if specific data transmissions are allowed or not. Thus, each data transmission received at a port of a common stateful firewall needs to be sent to the CPU to decide whether to allow passage of the packet or whether to reject it. However, sending every data transmission to the CPU introduces delay, which reduces the bandwidth. When an arrival rate of data transmissions is very high on all ports of a common stateful firewall of that kind, i.e. when a lot of data or data packets are received on all ports, the corresponding CPU may not be able to process all of the arriving data transmissions due to limited processing capability. Thus, there is the danger of data being lost. However, delays or losses of data packets pose a great problem, especially in safety critical networks like automotive networks in a vehicle.

In contrast to that the invention provides the possibility to implement a stateful firewall in a network maintaining a high bandwidth with little or even minimum possible delay and with reduced or no danger of data loss. Monitoring the establishment of the connection between the two network members by means of the processor unit is especially performed at a bandwidth of less than wire speed. Monitoring of data transmissions by means of the CAM after the connection is established is particularly performed at wire speed or near wires speed with little or almost no delay.

The traffic monitoring according to the present invention can be used for different kinds of networks. The present invention is particularly preferred for the use in a safety critical network like an automotive network, especially with complex electric-electronic-architecture (E/E-architecture). Particularly, by means of this automotive network, different components of a vehicle are connected with each other. The network members can e.g. be ECUs, sensors or actuators of the vehicle or also different subdomains. A subdomain of that kind can comprise different components, which are connected with each other by a communication link, e.g. Ethernet, CAN, LIN, etc. Different subdomains thus can have different communication links. In the course of so called domain controlled architecture, these different subdomains are connected with each other by means of the network switch. Particularly, also network members outside of the vehicle can be connected with the network switch and thus with the automotive network, e.g. an external server or a cloud.

With automotive networks becoming more and more complex with time, the traffic in automotive networks increases and so does the amount of safety critical data to be monitored. With the stateful firewall implemented according to the invention, this amount of data can be monitored at wire speed or near wire speed with little delay and the strict safety regulations of automotive networks can be satisfied. Strict firewalling of safety critical data can be enabled in order to e.g. prevent attacks and introduction of harmful content into the automotive network. For example in an automotive network with domain controlled architecture, interdomain traffic as well as traffic from the outside world entering the automotive network can strictly be firewalled.

According to a particularly preferable embodiment, if the connection between the two network members is allowed and established, the processor unit stores the stateful firewall rule concerning the data transmission between the two network members from the stateful firewall state table in the CAM. This transfer of the corresponding rule is particularly performed during runtime of the processor unit.

It shall be understood that the processor unit can also transfer two or more stateful firewall rules from the state table to the CAM. Particularly, the processor unit can link the corresponding stateful firewall rule with the corresponding action (i.e. allow, deny or transfer to the CPU) and store the rule and the corresponding action as an entry in the CAM.

Alternatively, if the connection between the two network members is allowed and established, the processor unit advantageously enables the stateful firewall rule concerning the data transmission between the two network members from the stateful firewall state table stored in the CAM. One or several stateful firewall rules are especially pre-written in the CAM. The pre-written rules are particularly not enabled in advance, but are enabled by means of the processor unit during runtime. In this case, the processor unit particularly does not need to transfer rules during runtime, but only to enable the corresponding pre-written rules particularly by writing one register bit.

According to a particularly advantageous embodiment, the content addressable memory (CAM) is a ternary content addressable memory (TCAM). By its ability to search itself by content and not by address, the CAM can compare attributes of the received data transmission as input search data against a table of stored data, i.e. stored attributes of data transmissions in the form of stateful firewall rules. By means of a ternary content addressable memory (TCAM) certain attributes of the data transmission can particularly be associated with the "don't care" states of the TCAM.

According to a preferred embodiment, if the received data transmission is transferred to the processor unit for further evaluation, the processor unit decides whether to allow or to deny the data transmission. Advantageously, the processor unit changes the stateful firewall rule stored in the CAM, particularly during runtime. Thus, the switch CPU dynamically updates the CAM such that if this specific data transmission is received again, the CAM will allow or deny the transmission without consulting the processor unit.

The stateful firewall rule stored in the CAM preferably describes attributes of a particular data transmission between the two network members and whether that particular data transmission is allowed or denied. Upon receiving the data transmission between the two network members, the CAM advantageously evaluates whether attributes of the stored stateful firewall rule match corresponding attributes of the received data transmission between the two network members. Particularly, the CAM checks whether the attributes of the received data transmission match all of the attributes of one of the rules stored in the CAM. If that is the case, the CAM performs the corresponding action linked with this matching rule and thus particularly allows or denies passage of the data transmission through the network switch according to the matching rule or transfers it to the processor unit.

Particularly, information about these two network members can be provided as these attributes, e.g. network (e.g. IP) addresses and/or network switch ports. Moreover, information about the specific connection between these two network members can be provided as attributes like a communication protocol (e.g. TCP, UDP, ICMP) used for the connection and/or a state flag set by the corresponding communication protocol. State flags especially describe whether a particular message or data packet has been exchanged between the two network members. Furthermore, the attributes can concern the data to be transmitted and can for example describe the data specifically or a specific kind of data or which of the two network members is the source and which one is the destination of the transmission. Especially, it is provided as attribute or action, whether this specific data transmission is to be allowed or denied.

Advantageously, if a specific attribute of the stateful firewall rule stored in the CAM does not match a corresponding attribute of the received data transmission but that the remaining attributes of the stored stateful firewall rule match corresponding attributes of the received data transmission, the data transmission is transferred to the processor unit for further evaluation. In order to detect a single non-matching attribute the CAM can for example compare the received data transmission with two or more stateful firewall rules after each other, which especially only differ in the specific attribute. Particularly, when a TCAM is used, the specific attribute can be designated with a "don't care" state of the TCAM. Thus, if the data transmission between the two network members is basically allowed according to the corresponding rule, but only one attribute does not match, the processor unit is particularly consulted to decide how to further proceed with the transmission. This specific attribute is advantageously a state flag of a communication protocol.

Preferably, if the received data transmission is transferred to the processor unit for further evaluation, the processor unit decides whether to allow or to deny the data transmission. Advantageously, the processor unit changes the specific attribute of the stateful firewall rule in the CAM, particularly during runtime. The switch CPU thus dynamically updates the CAM.

According to a preferred embodiment, if the connection is allowed and established, upon meeting a termination condition the connection between the two network members is terminated. Preferably, the processor unit deletes or disables the stateful firewall rule stored in the CAM. Particularly, the switch CPU also updates the stateful firewall state table about the terminated connection. Therefore, monitoring the process of establishing the connection as well as monitoring the process of terminating the established connection are expediently performed by the processor unit and are thus implemented in software.

Advantageously, this termination condition is met when a timeout counter expires. If the connection is established, a corresponding timeout counter is preferably monitored, particularly by the processor unit. If the timeout counter expires, the connection is terminated and the processor unit deletes or disables the rule stored in the CAM. By means of this timeout counter it can especially be prevented that a connection between network members is maintained although they do not exchange data any more.

Alternatively or additionally, the termination condition is preferably met when a termination request is received. This termination request can be sent from one of the two connected network members to the other one in order to close the established connection. If the connection is established, advantageously upon receiving a termination request, the connection between the two network members is terminated and the processor unit deletes or disables the rule stored in the CAM. For example, the corresponding termination request can match a stateful firewall rule in the CAM linked with the action to transmit this termination request to the processor unit.

According to a preferred embodiment, Transmission Control Protocol (TCP) is used as communication protocol for the connection of the two network members. Advantageously, the connection between the two network members is established by means of a three way handshake according to the TCP. By using TCP for the connection, TCP state flags can be used to implement the stateful firewall. It is, however, also possible to use other communication protocols for the connection of the two network members, e.g. User Datagram Protocol (UDP) by using pseudo states or Internet Control Message Protocol (ICMP) by using ICMP sequence numbers as states.

A computing unit according to the invention, especially a network switch, is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular diskettes, hard drives, flash memory, EEPROM, CD-ROMs, DVDs etc. Downloading a program via computer networks (Internet, intranet, etc.) is possible.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

Description of drawings
- Fig. 1: schematically shows a network configured to preform a preferred embodiment of a method according to the invention.
- Fig. 2: schematically shows a preferred embodiment of a method according to the invention as a block diagram.

### Detailed Description of the Drawing

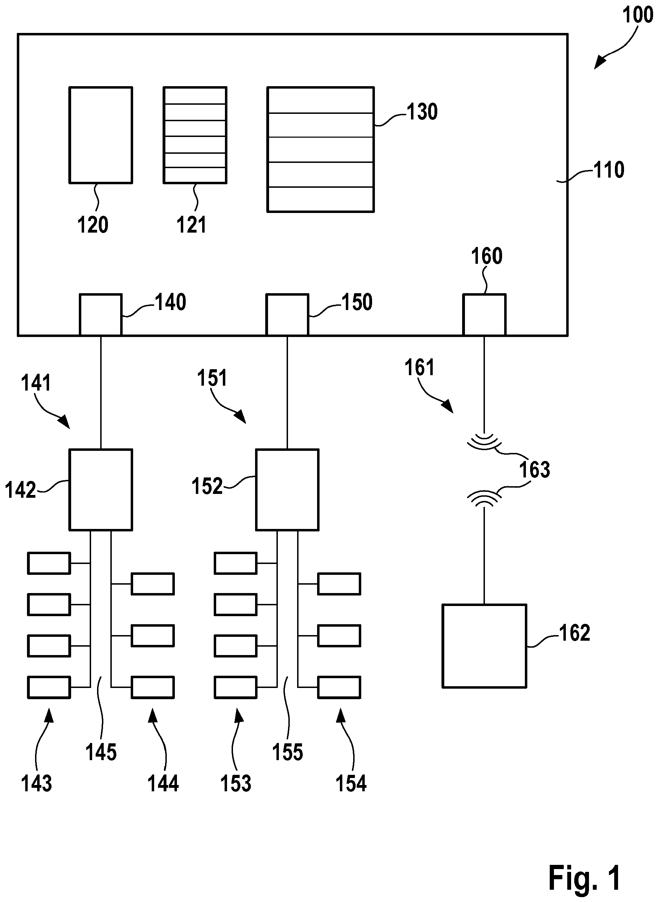

Fig. 1 schematically shows a network 100 configured to preform a preferred embodiment of a method according to the invention. The network 100 is especially an automotive network and is for example implemented in a vehicle.

A network switch being implemented as Ethernet switch 110 with a plurality of ports 140, 150, 160 is provided, with which a plurality of network members is connected. The network 100 is particularly embedded according to a domain controlled architecture, wherein different subdomains are connected with each other by means of the Ethernet switch 110.

A first network member 141 is connected with the network switch 110 at a port 140 and can for example be a first subdomain 141. This subdomain 141 can itself comprise several members which are connected with each other by means of a communication link 145, e.g. a CAN Bus or Ethernet. The subdomain 141 can comprise a domain controller 142, e.g. a motor control unit, several sensors 143 and actuators 144.

A second network member 151 connected with the Ethernet switch 110 at a port 150 can for example be a second subdomain with a domain controller 152, e.g. an electronic control unit (ECU) of the vehicle, sensors 153 and actuators 154 connected via a Bus system 155 like CAN. This ECU 152 can for instance control an entertainment system of the vehicle.

At a port 160 a third network member 161 is connected with the Ethernet switch 110. This third network member 161 can for example be an external server 162, with which the vehicle is connected via a wireless link 163.

It shall be understood that the network can comprise further ports and further network members not shown in Fig. 1 for reasons of simplification.

In order to prevent attacks and the introduction of harmful content into the vehicle network 100, traffic between the network members is monitored by means of the stateful firewall implemented in the Ethernet switch 110. For this purpose the Ethernet switch 110 comprises a processor unit 120, e.g. a central processing unit CPU, and content addressable memory CAM 130, preferably a ternary content addressable memory TCAM. The stateful firewall is implemented in the Ethernet switch 110 in a co-design by software executed on the CPU 120 and by hardware in the form of the TCAM 130.

A memory unit 121 is provided, e.g. a flash memory, to which the CPU 120 has access. A stateful firewall state or state table is stored in this memory 121. Entries of this state table are so called stateful firewall rules or rules stating, whether connections and data transmissions between different network members are allowed or denied.

Each of these rules concerns a specific connection and/or data transmission between two network members and describes attributes of the corresponding connection/transmission.

For example, each rule can describe the following attributes:
- an IP-address and the Ethernet switch port of a first network member;
- an IP-address and the Ethernet switch port of a second network member;
- a protocol for a connection between these two network members;
- a data or data packet to be transmitted between these two network members;
- a direction of the corresponding data packet transmission, i.e. from the first to the second network member or vice versa;
- whether to allow or deny this specific transmission.

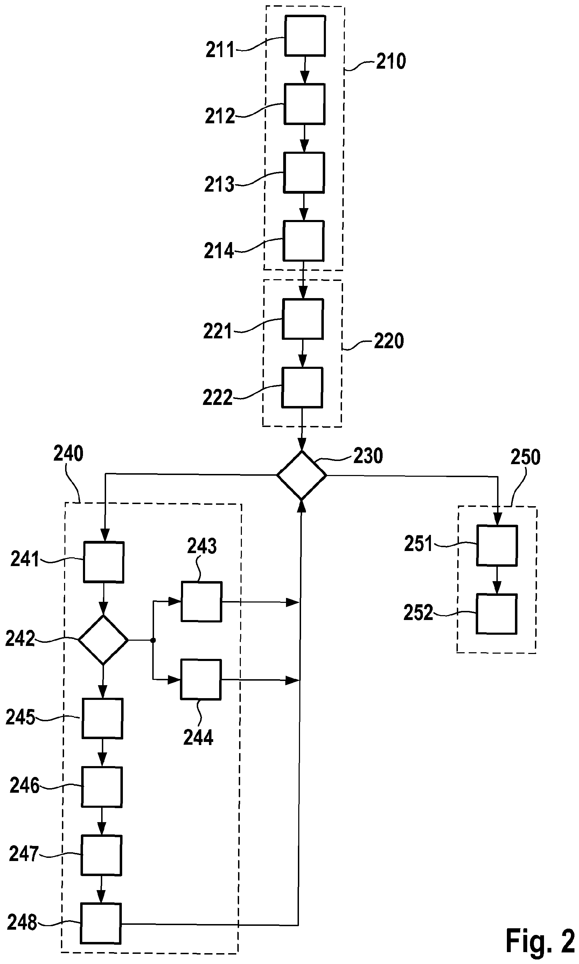

The implementation of the stateful firewall in the Ethernet switch 110 will hereafter be described with reference to Fig. 2, which schematically shows a preferred embodiment of a method according to the invention as a block diagram.

In the following an example will be described that the ECU 152 controlling the entertainment system of the vehicle communicates with the external server 162. For safety reasons only a request of the ECU 152 to establish a connection between itself and the external server 162 can be allowed according to a specific rule of the state table. However, a request of the server 162 to establish a connection with the CPU 152 must be denied according to a specific rule of the state table.

In the following, the ECU 152 is thus also referred to as "source" and the external server 162 is also referred to as "destination".

In step 210 a connection between the two network members 152 and 162 is established, especially a connection according to the Transmission Control Protocol TCP. The connection is particularly established by means of a three way handshake.

For this purpose, the source 152 sends in step 211 a TCP synchronise flag or synchronise data packet SYN to the destination 162. This SYN flag is received at the port 150 of the Ethernet switch 110. The CPU 120 checks whether this transmission of a SYN packet from the source 152 to the destination 162 is allowed according to the state table. Since this is the case, the CPU 120 allows the SYN packet to pass through the Ethernet switch 110 to the destination 162.

After receiving the SYN packet, the destination 162 sends a synchronise-acknowledgement packet SYN-ACK back to the source 152 in step 212. This SYN-ACK flag is received at the port 160 of the Ethernet switch 110. The CPU 120 checks whether this transmission of a SYN-ACK packet from the destination 162 to the source 152 is allowed according to the state table. Since this transmission is allowed, the CPU 120 lets the SYN-ACK packet pass through the Ethernet switch 110 to the source 152.

In step 213, the source 152 receives the SYN-ACK packet and sends an acknowledgement packet ACK to the destination 162. This packet is received in the port 150 and CPU 120 allows this transmission to pass since it is allowed according to the state table.

In step 214 the destination 162 receives the ACK packet and the connection is established. Thus, since all of the packets SYN, SYN-ACK, ACK are allowed to be transmitted according to the state table, the CPU 120 allows establishing the connection between the two network members 152, 162 upon receiving this request in form of the SYN, SYN-ACK, ACK packets.

However, if one of the packets SYN, SYN-ACK, ACK is not allowed to be transmitted according to the state table, the CPU 120 drops the corresponding packet and denies the requested connection.

After the connection is allowed and established, the CPU 120 dynamically updates the TCAM 130 in step 220 such that the TCAM 130 can monitor traffic between the connected source 152 and destination 162.

For this purpose, the CPU 120 updates the stateful firewall state table about the established connection in step 221. In step 222 the CPU 120 transfers one or more stateful firewall rules during runtime from the stateful firewall state table to the TCAM 130. It is also possible that the corresponding stateful firewall rule or rules are already stored but disabled in the TCAM 130 and that the processor unit enables this pre-written rules in the TCAM 130 at this point.

Each of these rules concerns a specific data transmission between the two network members 152, 162 and describes attributes of this specific data transmission.

For example, each of these rules can describe the following attributes:
- the IP-address and the Ethernet switch port of the source 152;
- the IP-address and the Ethernet switch port of the destination 162;
- a direction of the data transmission, i.e. from source 152 to destination 162 or vice versa;
- the protocol for the connection of source 142 and destination 152, in this case TCP;
- the state flag of the connection, e.g. which last state flag has been exchanged between the network members 142, 152;
- a counter, e.g. a timeout counter.

Furthermore, a specific action is linked with each of the rules, in particular whether to allow or deny this specific transmission or whether to transfer the specific transmission to the CPU 120 for further evaluation.

After establishing the connection between source 152 and destination 162 and after transferring the rules to the TCAM 130, in step 230 it is evaluated whether a termination condition is met and whether to monitor traffic between the connected source 152 and destination 162 in step 240 or whether to terminate their connection in step 250.

If this condition is met, the connection between the source 152 and destination 162 is terminated in step 251 and the CPU 120 deletes the transferred stateful firewall rules from the TCAM 130 in step 252.

As long as this condition is not met, traffic between the source 152 and the destination 162 is monitored in step 240. In step 241, a data transmission is received at port 150, e.g. a data packet sent from the source 152 to the destination 162.

The TCAM 130 evaluates in step 242, whether all the attributes of one of the rules stored in the TCAM 130 match the corresponding attributes of the received data transmission. If this is the case, the TCAM 130 performs the specific action linked with the matching rule and thus particularly allows or denies passing of the data packet through the Ethernet switch to the destination 162 in step 243. If it is evaluated in step 242 that all of the attributes of the received data transmission do not match all of the attributes of one of the rules stored in the TCAM 130, the data transmission is denied in step 244. Afterwards evaluation of the termination condition in step 230 is performed again.

If, however, there is a rule, wherein one specific attribute of this rule, particularly the attribute describing the state flag, does not match the corresponding attribute of the received data transmission, the data transmission is transmitted to the CPU 120 for further evaluation. In order to detect such a single non-matching attribute the data transmission is compared with two rules after each other, wherein these two rules only differ in the specific attribute describing the state flag. The first one of these two rules has a certain value for the state flag attribute, e.g. ACK. The second one of these rules has a "don't care" state for this attribute.

Thus, in step 245, if the data packet does not match the first rule, because its attribute describing the state flag differs from this rule, it matches the second rule. In step 246 the TCAM 130 performs the action linked with this second rule and transfers the received data packet to the CPU 120 for further evaluation.

If the data packet is sent to the CPU 120 in step 246, the CPU 120 decides in step 247 whether to allow or to deny the transmission and updates the corresponding rule stored in the TCAM 130 in step 248. Step 230 is performed again after that.

In step 230 it can be evaluated whether a timeout counter expires. For example, the CPU 120 can monitor a corresponding timeout counter started after establishing the connection between source 152 and 162 in step 214. If this timeout counter expires, the CPU 120 terminates the connection in step 250.

Alternatively or additionally, it can be evaluated in step 230 whether a termination request is received, e.g. in the form of a four way handshake according to the TCP. In the course of this four way handshake, one of the two connected network members, especially the source 152, sends a finish flag or finish data packet FIN to the other network member, especially the destination 162. This FIN flag is received at port 150. For example, a stateful firewall rule can be stored in the TCAM 130 corresponding to this FIN data packet and linked with the action to transfer this packet to the CPU 120. Thus, after receiving the FIN packet, the TCAM 130 transfers it to the CPU 120, which allows passage of the FIN packet since it is especially allowed according to the state table.

The destination 162 receives this FIN packet and sends an acknowledgement flag or packet ACK to the source 152. The ACK flag is received at port 160. A stateful firewall rule stored in the TCAM 130 can correspond to this ACK data packet and also be linked with the action to transfer is to the CPU 120. Thus, the ACK packet is transferred to the CPU 120 and allowed to pass by the CPU 120 since its passage it allowed according to the state table.

After the source 152 receives this ACK packet, the destination 162 also sends a finish flag to the source 152. This FIN flag is received at port 160 and transferred to the CPU 120, which also particularly allows its passage through the Ethernet switch 110.

After the source 152 receives this FIN flag from the destination 162, the source 152 sends an ACK packet to the destination 162, which is received at port 150, transferred to the CPU 120 and allowed to pass. After the destination 162 receives this ACK packet, the connection is terminated.

## Claims

1. A method for monitoring traffic between network members (142, 152, 162) in a network (100), whereby the network (100) is an automotive network, by means of a stateful firewall, wherein in the network (100) different network members (142, 152, 162) are connected with a network switch (110), the network switch (110) comprising a processor unit (120) and a content addressable memory CAM (130), the processor unit (120) having access to a stateful firewall state table with stateful firewall rules stating whether connections and data transmissions between different network members (142, 152, 162) are allowed or denied; wherein a first part of the stateful firewall is implemented in the network switch (110) by software executed on the processor unit (120) and wherein a second part of the stateful firewall is implemented in the network switch (110) by hardware in the form of the CAM (130);
wherein the method comprises the following steps:
∘ upon receiving a request for establishing a connection between two network members (152, 162), the processor unit (120) decides whether to allow or to deny the connection according to the stateful firewall state table (210);
∘ if the connection is allowed and established, the processor unit (120) stores (222) a stateful firewall rule concerning the data transmission between the two network members (152, 162) from the stateful firewall state table in the CAM (130, 220) or enables a stateful firewall rule concerning the data transmission between the two network members (152, 162) from the stateful firewall state table stored in the CAM (130, 220);
∘ upon receiving (241) a data transmission between the two network members (152, 162), the CAM (130) compares this received data transmission with the stateful firewall rule concerning the data transmission between the two network members (152, 162) from the stateful firewall state table stored in the CAM (130), wherein the CAM (130) compares attributes of the received data transmission with attributes of the stored stateful firewall rule; and
∘ depending on a result of this comparison and depending on whether the attributes of the received data transmission match the attributes of the stored stateful firewall rule the received data transmission is allowed or denied (243, 244) or transferred (246) to the processor unit (120) for further evaluation (240).

2. The method according to claim 1, wherein, if the received data transmission is transferred to the processor unit (120) for further evaluation (246), the processor unit (120) decides (247) whether to allow or to deny the data transmission and changes (248) the stateful firewall rule stored in the CAM (130).

3. The method according to any one of the preceding claims, wherein
- the stateful firewall rule stored in the CAM (130) describes attributes of a data transmission between the two network members (152, 162) and whether that data transmission is allowed or denied or transmitted to the processor unit (120), and
- upon receiving (241) the data transmission between the two network members (152, 162), the CAM (130) evaluates (242) whether attributes of the stored stateful firewall rule match corresponding attributes of the received data transmission between the two network members (152, 162).

4. The method according to claim 3, wherein if a specific attribute of the stateful firewall rule stored in the CAM (130) does not match a corresponding attribute of the received data transmission but the remaining attributes of the stored stateful firewall rule match corresponding attributes of the received data transmission (245), the data transmission is transferred to the processor unit (120) for further evaluation (246).

5. The method according to claim 4, wherein if the received data transmission is transferred to the processor unit (130) for further evaluation (246), the processor unit (130) decides (247) whether to allow or to deny the data transmission and changes (248) the specific attribute of the stateful firewall rule stored in the CAM (130).

6. The method according to claim 4 or 5, wherein the specific attribute is a state flag of a communication protocol.

7. The method according to any one of the preceding claims, wherein if the connection is allowed and established, upon meeting a termination condition, the connection between the two network members (152, 162) is terminated (251) and the processor unit (120) deletes (252) or disables the stateful firewall rule stored in the CAM (130).

8. The method according to claim 7, wherein if the connection is established, a timeout counter is monitored (230) and if the timeout counter expires, the connection between the two network members (152, 162) is terminated (251) and the processor unit (120) deletes (252) or disables the stateful firewall rule stored in the CAM (130).

9. The method according claim 7 or 8, wherein if the connection is established, upon receiving a termination request (230), the connection between the two network members (152, 162) is terminated (251) and the processor unit (120) deletes (252) or disables the stateful firewall rule stored in the CAM (130).

10. The method according to any one of the preceding claims, wherein Transmission Control Protocol (TCP) is used as a communication protocol for the connection of the two network members.

11. The method according to any one of the preceding claims, wherein the content addressable memory (130) is a ternary content addressable memory TCAM (130).

12. Computing unit, especially network switch (110), adapted to perform a method according to any one of the preceding claims.

13. A computer program which causes a computing unit to (110) perform a method according to any one of claims 1 to 11 when it is executed on the computing unit (110).

14. A machine-readable storage medium having stored thereon a computer program of claim 13.

## Patentansprüche

1. Verfahren zum Überwachen von Verkehr zwischen Netzelementen (142, 152, 162) in einem Netz (100), wobei das Netz (100) ein Fahrzeugnetz ist, mit Hilfe einer zustandsbehafteten Firewall,
wobei in dem Netz (100) verschiedene Netzelemente (142, 152, 162) mit einem Netz-Switch (110) verbunden sind, wobei der Netz-Switch (110) eine Prozessoreinheit (120) und einen inhaltsadressierbaren Speicher CAM (130) umfasst, wobei die Prozessoreinheit (120) einen Zugriff auf eine Zustandstabelle einer zustandsbehafteten Firewall mit Regeln einer zustandsbehafteten Firewall besitzt, die darlegen, ob Verbindungen und Datenübertragungen zwischen verschiedenen Netzelementen (142, 152, 162) erlaubt oder verweigert sind;
wobei ein erster Teil der zustandsbehafteten Firewall in dem Netz-Switch (110) durch Software implementiert ist, die auf der Prozessoreinheit (120) ausgeführt wird, und wobei ein zweiter Teil der zustandsbehafteten Firewall in dem Netz-Switch (100) durch Hardware in der Form des CAM (130) implementiert ist;
wobei das Verfahren die folgenden Schritte umfasst:
- bei Empfang einer Anforderung zum Einrichten einer Verbindung zwischen zwei Netzelementen (152, 162) entscheidet die Prozessoreinheit (120), ob die Verbindung gemäß der Zustandstabelle einer zustandsbehafteten Firewall (210) zu erlauben oder zu verweigern ist;
- dann, wenn die Verbindung erlaubt und eingerichtet ist, speichert (222) die Prozessoreinheit (120) eine Regel einer zustandsbehafteten Firewall, die die Datenübertragung zwischen den zwei Netzelementen (152, 162) betrifft, von der Zustandstabelle einer zustandsbehafteten Firewall in dem CAM (130, 220) oder aktiviert eine Regel einer zustandsbehafteten Firewall, die die Datenübertragung zwischen den zwei Netzelementen (152, 162) betrifft, von der Zustandstabelle einer zustandsbehafteten Firewall in dem CAM (130, 220);
- bei Empfang (241) einer Datenübertragung zwischen den zwei Netzelementen (152, 162) vergleicht der CAM (130) diese empfangene Datenübertragung mit der Regel einer zustandsbehafteten Firewall, die die Datenübertragung zwischen den zwei Netzelementen (152, 162) betrifft, von der in dem CAM (130) gespeicherten Zustandstabelle einer zustandsbehafteten Firewall, wobei der CAM (130) Attribute der empfangenen Datenübertragung mit Attributen der gespeicherten Regel einer zustandsbehafteten Firewall vergleicht; und
- abhängig von einem Ergebnis dieses Vergleichs und abhängig davon, ob die Attribute der empfangenen Datenübertragung mit den Attributen der gespeicherten Regel einer zustandsbehafteten Firewall übereinstimmen, wird die empfangene Datenübertragung erlaubt oder verweigert (243, 244) oder an die Prozessoreinheit (120) für eine weitere Beurteilung (240) übertragen (246).

2. Verfahren nach Anspruch 1, wobei dann, wenn die empfangene Datenübertragung für eine weitere Beurteilung (246) an die Prozessoreinheit (120) übertragen wird, die Prozessoreinheit (120) entscheidet (247), ob die Datenübertragung zu erlauben oder zu verweigern ist, und ändert (248) die in dem CAM (130) gespeicherte Regel einer zustandsbehafteten Firewall.

3. Verfahren nach einem der vorhergehenden Ansprüche, wobei
- die in dem CAM (130) gespeicherte Regel einer zustandsbehafteten Firewall Attribute einer Datenübertragung zwischen den zwei Netzelementen (152, 162) und die Tatsache, ob diese Datenübertragung erlaubt oder verweigert oder an die Prozessoreinheit (120) übertragen wird, beschreibt und
- bei Empfang (241) der Datenübertragung zwischen den zwei Netzelementen (152, 162) der CAM (130) beurteilt (242), ob Attribute der gespeicherten Regel einer zustandsbehafteten Firewall mit entsprechenden Attributen der empfangenen Datenübertragung zwischen den zwei Netzelementen (152, 162) übereinstimmen.

4. Verfahren nach Anspruch 3, wobei dann, wenn ein spezifisches Attribut der in dem CAM (130) gespeicherten Regel einer zustandsbehafteten Firewall nicht mit einem entsprechenden Attribut der empfangenen Datenübertragung übereinstimmt, aber die verbleibenden Attribute der gespeicherten Regel einer zustandsbehafteten Firewall mit entsprechenden Attributen der empfangenen Datenübertragung (245) übereinstimmen, die Datenübertragung an die Prozessoreinheit (120) für eine weitere Beurteilung (246) übertragen wird.

5. Verfahren nach Anspruch 4, wobei dann, wenn die empfangene Datenübertragung an die Prozessoreinheit (130) für eine weitere Beurteilung (246) übertragen wird, die Prozessoreinheit (130) entscheidet (247), ob die Datenübertragung zu erlauben oder zu verweigern ist, und das spezifische Attribut der in dem CAM (130) gespeicherten Regel einer zustandsbehafteten Firewall ändert (248).

6. Verfahren nach Anspruch 4 oder 5, wobei das spezifische Attribut eine Zustandsmarkierung eines Kommunikationsprotokolls ist.

7. Verfahren nach einem der vorhergehenden Ansprüche, wobei dann, wenn die Verbindung erlaubt und eingerichtet ist, bei Erfüllen einer Beendigungsbedingung die Verbindung zwischen den zwei Netzelementen (152, 162) beendet (251) wird und die Prozessoreinheit (120) die in dem CAM (130) gespeicherte Regel einer zustandsbehafteten Firewall löscht (252) oder deaktiviert.

8. Verfahren nach Anspruch 7, wobei dann, wenn die Verbindung eingerichtet ist, ein Timeout-Zähler überwacht (230) wird und dann, wenn der Timeout-Zähler abläuft, die Verbindung zwischen den zwei Netzelementen (152, 162) beendet (251) wird und die Prozessoreinheit (120) die in dem CAM (130) gespeicherte Regel löscht (252) oder deaktiviert.

9. Verfahren nach Anspruch 7 oder 8, wobei dann, wenn die Verbindung eingerichtet ist, bei Empfang einer Beendigungsanforderung (230) die Verbindung zwischen den zwei Netzelementen (152, 162) beendet (251) wird und die Prozessoreinheit (120) die in dem CAM (130) gespeicherte Regel einer zustandsbehafteten Firewall löscht (252) oder deaktiviert.

10. Verfahren nach einem der vorhergehenden Ansprüche, wobei ein Übertragungssteuerprotokoll (TCP) als Kommunikationsprotokoll für die Verbindung der zwei Netzelemente verwendet wird.

11. Verfahren nach einem der vorhergehenden Ansprüche, wobei der inhaltsadressierbare Speicher (130) ein ternärer inhaltsadressierbarer Speicher TCAM (130) ist.

12. Recheneinheit, insbesondere ein Netz-Switch (110), die ausgelegt ist, ein Verfahren nach einem der vorhergehenden Ansprüche auszuführen.

13. Computerprogramm, das bewirkt, dass eine Recheneinheit ein Verfahren nach einem der Ansprüche 1 bis 11 ausführt (110), wenn es auf der Recheneinheit (110) ausgeführt wird.

14. Maschinenlesbares Speichermedium mit auf ihm gespeicherten Computerprogramm nach Anspruch 13.

## Revendications

1. Procédé pour surveiller le trafic entre des membres de réseau (142, 152, 162) dans un réseau (100), le réseau (100) étant un réseau automobile, au moyen d'un pare-feu dynamique,
où, dans le réseau (100), différents membres du réseau (142, 152, 162) sont connectés à un commutateur de réseau (110), le commutateur de réseau (110) comprenant une unité de traitement (120) et une mémoire adressable par contenu, CAM, (130), l'unité de traitement (120) ayant accès à une table d'état de pare-feu dynamique avec des règles de pare-feu dynamique indiquant si les connexions et les transmissions de données entre différents membres du réseau (142, 152, 162) sont autorisées ou refusées ;
où une première partie du pare-feu dynamique est mise en œuvre dans le commutateur de réseau (110) par un logiciel exécuté sur l'unité de traitement (120) et où une seconde partie du pare-feu dynamique est mise en œuvre dans le commutateur de réseau (110) par un matériel sous la forme de la CAM (130) ;
où le procédé comprend les étapes suivantes :
o à la réception d'une demande d'établissement d'une connexion entre deux membres du réseau (152, 162), l'unité de traitement (120) décide d'autoriser ou de refuser la connexion en fonction de la table d'état du pare-feu dynamique (210) ;
o si la connexion est autorisée et établie, l'unité de traitement (120) stocke (222) une règle de pare-feu dynamique concernant la transmission de données entre les deux membres du réseau (152, 162) à partir de la table d'état de pare-feu dynamique dans la CAM (130, 220) ou active une règle de pare-feu dynamique concernant la transmission de données entre les deux membres du réseau (152, 162) à partir de la table d'état de pare-feu dynamique stockée dans la CAM (130, 220) ;
o à la réception (241) d'une transmission de données entre les deux membres du réseau (152, 162), la CAM (130) compare cette transmission de données reçue avec la règle de pare-feu dynamique concernant la transmission de données entre les deux membres du réseau (152, 162) à partir de la table d'état de pare-feu dynamique stockée dans la CAM (130), où la CAM (130) compare les attributs de la transmission de données reçue avec les attributs de la règle de pare-feu dynamique stockée ; et
o en fonction d'un résultat de cette comparaison et selon que les attributs de la transmission de données reçue correspondent ou non aux attributs de la règle de pare-feu dynamique stockée, la transmission de données reçue est autorisée ou refusée (243, 244) ou transférée (246) à l'unité de traitement (120) pour une évaluation supplémentaire (240).

2. Procédé selon la revendication 1, dans lequel, si la transmission de données reçue est transférée à l'unité de traitement (120) pour une évaluation supplémentaire (246), l'unité de traitement (120) décide (247) d'autoriser ou de refuser la transmission de données et modifie (248) la règle de pare-feu dynamique stockée dans la CAM (130).

3. Procédé selon l'une quelconque des revendications précédentes, dans lequel :
o la règle de pare-feu dynamique stockée dans la CAM (130) décrit les attributs d'une transmission de données entre les deux membres du réseau (152, 162) et si cette transmission de données est autorisée ou refusée ou transmise à l'unité de traitement (120), et
o à la réception (241) de la transmission de données entre les deux membres du réseau (152, 162), la CAM (130) évalue (242) si les attributs de la règle de pare-feu dynamique stockée correspondent aux attributs correspondants de la transmission de données reçue entre les deux membres du réseau (152, 162).

4. Procédé selon la revendication 3, dans lequel, si un attribut spécifique de la règle de pare-feu dynamique stockée dans la CAM (130) ne correspond pas à un attribut correspondant de la transmission de données reçue mais que les autres attributs de la règle de pare-feu dynamique stockée correspondent à des attributs correspondants de la transmission de données reçue (245), la transmission de données est transférée à l'unité de traitement (120) pour une évaluation supplémentaire (246).

5. Procédé selon la revendication 4, dans lequel si la transmission de données reçue est transférée à l'unité de traitement (130) pour une évaluation supplémentaire (246), l'unité de traitement (130) décide (247) d'autoriser ou de refuser la transmission de données et modifie (248) l'attribut spécifique de la règle de pare-feu dynamique stockée dans la CAM (130).

6. Procédé selon la revendication 4 ou la revendication 5, dans lequel l'attribut spécifique est un drapeau d'état d'un protocole de communication.

7. Procédé selon l'une quelconque des revendications précédentes, dans lequel, si la connexion est autorisée et établie, lorsqu'une condition de terminaison est satisfaite, la connexion entre les deux membres du réseau (152, 162) se termine (251) et l'unité de traitement (120) supprime (252) ou désactive la règle de pare-feu dynamique stockée dans la CAM (130).

8. Procédé selon la revendication 7, dans lequel, si la connexion est établie, un compteur de dépassement de temps est surveillé (230) et, si le compteur de dépassement de temps arrive à expiration, la connexion entre les deux membres du réseau (152, 162) se termine (251) et l'unité de traitement (120) supprime (252) ou désactive la règle de pare-feu dynamique stockée dans la CAM (130).

9. Procédé selon la revendication 7 ou la revendication 8, dans lequel, si la connexion est établie, à la réception d'une demande de terminaison (230), la connexion entre les deux membres du réseau (152, 162) se termine (251) et l'unité de traitement (120) supprime (252) ou désactive la règle de pare-feu dynamique stockée dans la CAM (130).

10. Procédé selon l'une quelconque des revendications précédentes, dans lequel le protocole de contrôle de transmission, TCP, est utilisé comme protocole de communication pour la connexion des deux membres du réseau.

11. Procédé selon l'une quelconque des revendications précédentes, dans lequel la mémoire adressable par contenu (130) est une mémoire adressable par contenu ternaire, TCAM, (130).

12. Unité de calcul, notamment commutateur réseau (110), adaptée pour exécuter un procédé selon l'une quelconque des revendications précédentes.

13. Programme informatique qui amène une unité de calcul (110) à exécuter un procédé selon l'une quelconque des revendications 1 à 11 lorsqu'il est exécuté sur l'unité de calcul (110).

14. Support de stockage lisible par une machine sur lequel est stocké un programme informatique selon la revendication 13.
